# EUROPÄISCHE PATENTSCHRIFT

(11) **EP 3 298 465 B1**
(45) Veröffentlichungstag und Bekanntmachung des Hinweises auf die Patenterteilung: **07.07.2021**
(21) Anmeldenummer: 16724327.8
(22) Anmeldetag: 10.05.2016
(51) Int. Cl.: G05D 1/00, G08G 1/0965

(54) **HOCHAUTOMATISIERTES STEUERN EINES KRAFTFAHRZEUGS**
HIGHLY AUTOMATED CONTROL OF A MOTOR VEHICLE
PILOTAGE HAUTEMENT AUTOMATISÉ D'UN VÉHICULE À MOTEUR

(30) Priorität: 19.05.2015 DE 102015209133
(43) Veröffentlichungstag der Anmeldung: 28.03.2018
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2016/060417
(87) Internationale Veröffentlichungsnummer: WO 2016/184725

(56) Entgegenhaltungen:
- DE-A1-102012 016 802
- DE-A1-102013 220 307
- US-A1- 2008 161 987
- US-A1- 2012 083 960
- US-A1- 2013 211 624

## Beschreibung

Die Erfindung betrifft das hochautomatisierte Steuern eines Kraftfahrzeugs. Insbesondere betrifft die Erfindung eine Interaktion mit einer berechtigten Stelle wie einer Polizeikraft.

Mittels einer hochautomatisierten Funktion (highly automated function, HAF) kann ein Kraftfahrzeug fahrerunabhängig geführt werden. Insbesondere können eine Längs- oder Quersteuerung des Kraftfahrzeugs durchgeführt werden, ohne dass der Fahrer eine weitere Kontrolle der durchgeführten Funktion wahrnehmen muss. Da der Fahrer im Fall einer unbekannten Situation oder einer Funktionsstörung nicht als Rückfallebene zur Verfügung steht, müssen HAF-Funktionen so umgesetzt werden, dass sich das Kraftfahrzeug stets in einem sicheren Zustand befindet.

Manche Situationen können für ein automatisiertes System schwer erfasst werden. Beispielsweise kann eine Quersteuerung eines Kraftfahrzeugs Gebrauch von Fahrbahnmarkierungen machen, die beispielsweise optisch abgetastet werden. Greift jedoch beispielsweise ein Polizist in die Verkehrsregelung ein, so ist es für ein verarbeitendes System im Allgemeinen schwierig, auf der Basis optischer Daten den Polizisten und die von ihm beispielsweise mittels Handzeichen dargestellte Fahranweisung korrekt zu erfassen.

DE 10 2010 003 740 A1 schlägt deshalb vor, eine Anweisung von einem Polizei- oder Rettungsfahrzeug an ein anderes Kraftfahrzeug beispielsweise mittels Datenfunk zu übermitteln.

Die Offenlegungsschrift DE 10 2012 016 802 A1 beschreibt ein Verfahren zur Steuerung eines autonomen Fahrzeugsystems.

Die Offenlegungsschrift DE 10 2013 220 307 A1 beschreibt ein System und ein Verfahren zur Unterstützung eines Fahrers eines Kraftfahrzeugs bei der Bildung von Rettungsgassen.

Die Offenlegungsschrift US 2008/161987 A1 offenbart autonom fahrendes Fahrzeug.

Die Offenlegungsschrift US 2012/083960 A1 offenbart ein System und ein Verfahren zum Vorhersagen eines Verhaltens von detektierten Objekten.

Die Offenlegungsschrift US 2013/211624 A1 offenbart ein Steuersystem zum Reisen in einem Platoon.

Der Erfindung liegt die Aufgabe zugrunde, das Steuern eines Kraftfahrzeugs mittels hochautomatisierter Funktionen beim Eingreifen einer autorisierten Stelle in den Verkehr sicherzustellen. Die Erfindung löst diese Aufgabe mittels der Gegenstände der unabhängigen Ansprüche. Unteransprüche geben bevorzugte Ausführungsformen wieder.

### Offenbarung der Erfindung

Die Erfindung betrifft ein Verfahren zum Steuern eines Kraftfahrzeugs nach Anspruch 1.

Dadurch kann das fahrerunabhängige Führen des Kraftfahrzeugs auch dann fortgeführt werden, wenn beispielsweise eine Ordnungskraft eine Fahranweisung an das Kraftfahrzeug gibt. Die Ordnungskraft kann beispielsweise eine Einsatzkraft der Polizei, der Feldjäger, des Bundesamtes für Güterverkehr, des Zolls, der Feuerwehr, des Technischen Hilfswerks oder eines Rettungsdienstes sein. Dadurch kann der Fahranweisung insbesondere rasch Folge geleistet werden, wenn der Fahrer nicht in der Lage ist, in angemessener Zeit auf die Fahranweisung zu reagieren. Die Sicherheit des Fahrbetriebs des Kraftfahrzeugs und eines umliegenden Straßenverkehrs kann dadurch verbessert sichergestellt sein.

In der Erfindung ist die Einrichtung an Bord eines Vorausfahrenden Fahrzeugs angebracht. Das Fahrzeug kann ein Zivilfahrzeug sein, das optisch zunächst nicht als Einsatzfahrzeug erkennbar sein kann. Es kann sich jedoch auch um ein offizielles Einsatzfahrzeug handeln, das beispielsweise mit einem optischen Anhaltesignalgeber ausgerüstet ist.

In der Erfindung umfasst die Fahranweisung ein Folgen des vorausfahrenden

Kraftfahrzeugs. In diesem Fall kann das Kraftfahrzeug dazu gesteuert werden, dem vorausfahrenden Fahrzeug zu folgen. Ein einzuhaltender Sicherheitsabstand kann dabei fahrerunabhängig gewählt werden.

In noch einer weiteren Ausführungsform wird eine Bestätigung der Fahranweisung durch den Fahrer abgetastet und die Führung des Kraftfahrzeugs wird an den Fahrer übergeben. Diese Übergabe kann prinzipiell zu jedem Zeitpunkt des Verfahrens erfolgen. In einer Variante kann nach dem Übergeben der Führung des Kraftfahrzeugs an den Fahrer überwacht werden, ob der Fahrer die Fahranweisung einhält. Tut er dies nicht, so kann ein weiteres Signal an den Fahrer ausgegeben werden. Es kann auch ein Signal an die Einrichtung in der Umgebung des Kraftfahrzeugs zurückgesandt werden, die auch die Weigerung des Fahrers zur Ausführung der Fahranweisung umfasst.

Das Übernehmen der Führung durch den Fahrer kann an die Stelle übermittelt werden, von der die Fahranweisung empfangen wurde. Dadurch kann beispielsweise ein Polizist, der die Fahranweisung übermittelt hat, besser einschätzen, wer das Kraftfahrzeug gerade steuert.

Die empfangene Fahranweisung kann bei der sendenden Stelle quittiert werden. Die sendende Stelle kann dadurch rechtssicher davon ausgehen, dass der Fahrer von der übermittelten Fahranweisung informiert wurde.

Beide Rückmeldungen können in Bezug auf Gesetze, Versicherungen und eine allgemeine Dokumentation relevant sein.

Die Erfindung betrifft auch ein Computerprogrammprodukt nach Anspruch 5.

Die Erfindung betrifft auch eine Steuereinrichtung nach Anspruch 6.

### Kurze Beschreibung der Figuren

Die Erfindung wird nun mit Bezug auf die beigefügten Figuren genauer beschrieben, in denen:
- Fig. 1: ein Kraftfahrzeug mit einer Steuereinrichtung zur fahrerunabhängigen Führung des Kraftfahrzeugs;
- Fig. 2: ein Ablaufdiagramm eines Verfahrens zum Steuern des Kraftfahrzeugs von Fig. 1; und
- Fig. 3: beispielhafte Signale von berechtigten Personen darstellt.

### Genaue Beschreibung von Ausführungsbeispielen

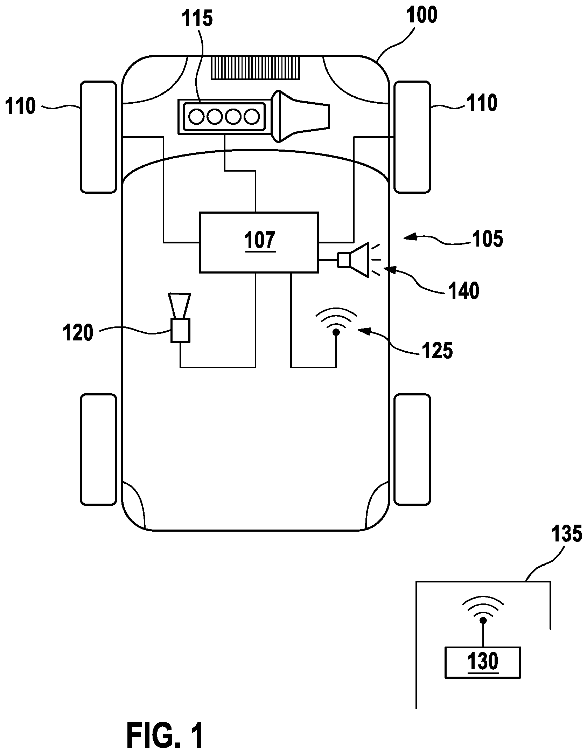

Figur 1 zeigt ein Kraftfahrzeug 100 mit einer Steuereinrichtung 105 zur fahrerunabhängigen Führung des Kraftfahrzeugs 100. Die Steuereinrichtung 105 umfasst eine Verarbeitungseinrichtung 107 und ist dazu eingerichtet, insbesondere eine Längs- oder Quersteuerung des Kraftfahrzeugs 100 ohne den Eingriff eines Fahrers und insbesondere ohne die Möglichkeit einer schnellen Abgabe der Kontrolle über das Kraftfahrzeug 100 an den Fahrer zu erfordern. In der dargestellten, beispielhaften Ausführungsform ist die Steuereinrichtung 105 mit einem Rad 110 verbunden, um dieses zu lenken oder zu bremsen. Weiter ist die Steuereinrichtung 105 in beispielhafter Weise mit einem Antriebsmotor 115 verbunden, um eine Beschleunigung des Kraftfahrzeugs 100 zu steuern.

Die Steuerung der Längs- oder Querbewegung des Kraftfahrzeugs 100 erfolgt üblicherweise in Abhängigkeit eines Steuerungsziels, das beispielsweise aus einem Navigationssystem übernommen werden kann, und Steuerungsparametern, die aus einem Umfeld des Kraftfahrzeugs 100 abgetastet werden können. Stellvertretend für eine Vielzahl unterschiedlicher möglicher Sensoren ist eine Kamera 120 zur optischen Abtastung der Umgebung des Kraftfahrzeugs 100 eingezeichnet. In anderen Ausführungsformen können beispielsweise Radar-, Lidar- oder Ultraschallsensoren verwendet werden.

Des Weiteren umfasst die Steuereinrichtung 105 eine Empfangseinrichtung 125 zum Empfangen einer drahtlos übermittelten Fahranweisung von einer Einrichtung 130 in der Umgebung des Kraftfahrzeugs 100. Die Einrichtung 130 kann beispielsweise ein portables, handbetriebenes Gerät umfassen oder in einer anderen Ausführungsform auch an Bord eines Fahrzeugs 135 angeordnet sein. Die Verwendung der Einrichtung 130 ist üblicherweise auf einen Bereich um das Kraftfahrzeug 100 beschränkt, den eine Bedienperson der Einrichtung 130 einsehen kann. Die drahtlose Übermittlung zwischen der Einrichtung 130 und dem Kraftfahrzeug 100 kann beispielsweise mittels WLAN, Bluetooth, Mobilfunk, Infrarot oder allgemein Fahrzeug-zu-Fahrzeug (Car-to-Car, C2C) oder Fahrzeug-zu-Infrastruktur (Car-to-Infrastructure, C2I) abgewickelt werden.

Von der Einrichtung 130 kann eine Fahranweisung an das Kraftfahrzeug 100 übermittelt werden, die alternativ durch den Fahrer des Kraftfahrzeugs 100 oder durch die Steuereinrichtung 105 umgesetzt werden kann. Dabei ist bevorzugt, dass die Fahranweisung verschlüsselt übertragen wird. Außerdem kann die Fahranweisung eine Identifikation des Kraftfahrzeugs 100 umfassen, beispielsweise dessen amtliches Kennzeichen. Weiter kann eine Identifikation einer Bedienperson, einer Organisation oder des weiteren Fahrzeugs 135 übermittelt werden. Die Steuereinrichtung 105 kann dazu eingerichtet sein, eine Bestätigung über den Erhalt der Fahranweisung drahtlos an die Einrichtung 130 zurückzuübermitteln. Diese Bestätigung erfolgt bevorzugterweise ebenfalls auf einer verschlüsselten Verbindung und kann Identifikationen des Kraftfahrzeugs 100 und/oder der Einrichtung 130 umfassen.

Die Bestätigung kann automatisch oder gesteuert durch den Fahrer des Kraftfahrzeugs 100 zurückgesandt werden.

Es ist bevorzugt, dass die Steuereinrichtung 105 den Fahrer des Kraftfahrzeugs 100 mittels einer Ausgabeeinrichtung 140 von einer eingetroffenen Fahranweisung unterrichtet. Dazu kann die Fahranweisung beispielsweise als gesprochener Text oder als Signalton akustisch ausgegeben werden. Zusätzlich oder alternativ kann auch eine optische Ausgabe erfolgen, beispielsweise als Anweisungstext oder als Symbol.

Die Steuereinrichtung 105 ist bevorzugterweise dazu eingerichtet, eine empfangene Fahranweisung selbsttätig umzusetzen, wenn eine Übernahme des Kraftfahrzeugs 100 durch den Fahrer länger als eine vorbestimmte Zeit nicht erfolgt und/oder eine Umsetzung der Fahranweisung durch den Fahrer länger als eine vorbestimmte Zeit nicht erfolgt.

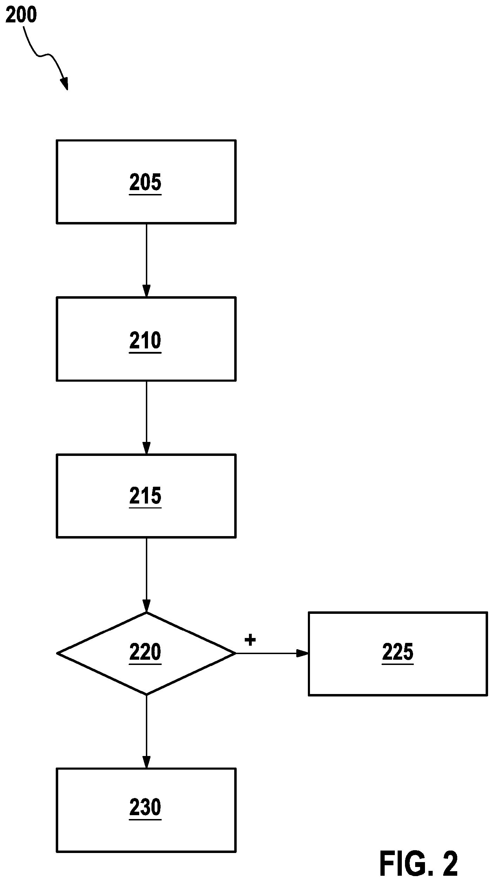

Figur 2 zeigt ein Ablaufdiagramm eines Verfahrens 200 zum Steuern des Kraftfahrzeugs 100 von Figur 1. Das Verfahren 200 ist insbesondere zum Ablaufen auf der Verarbeitungseinrichtung 107 der Steuereinrichtung 105 eingerichtet.

In einem ersten Schritt 205 wird das Kraftfahrzeug 100 fahrerunabhängig geführt. Das Führen kann insbesondere eine Längs- und/oder Quersteuerung des Kraftfahrzeugs 100 auf einer Straße umfassen. In einem Schritt 210 wird eine drahtlos übermittelte Fahranweisung empfangen. In einer Ausführungsform kann eine Bestätigung der empfangenen Fahranweisung zurückgeschickt werden. Ferner wird in einem Schritt 215 an den Fahrer des Kraftfahrzeugs 100 ein Hinweis auf die Fahranweisung ausgegeben.

In einem Schritt 220 wird überprüft, ob der Fahrer die Führung des Kraftfahrzeugs 100 übernimmt. Dies kann beispielsweise durch Betätigen einer Eingabekomponente wie eines Tasters oder durch Betätigen einer Steuerkomponente wie eines Gas- oder Bremspedals, eines Lenkrads oder eines Gangwählhebels erfolgen. In diesem Fall wird in einem Schritt 225 die Führung über das Kraftfahrzeug 100 an den Fahrer übergeben. Übernimmt der Fahrer die Führung des Kraftfahrzeugs 100, so kann dieser Umstand an die Komponente zurückübermittelt werden, von der die Fahranweisung empfangen wurde. In einer Ausführungsform kann auch übermittelt werden, dass der Fahrer die Führung (noch) nicht übernommen hat.

Wird im Schritt 220 hingegen bestimmt, dass der Fahrer die Führung nicht übernimmt, so kann nach Verstreichen einer vorbestimmten Zeit in einem Schritt 230 die empfangene Fahranweisung fahrerunabhängig ausgeführt werden. Wie oben genauer ausgeführt wurde, kann die Fahranweisung beispielsweise ein Folgen des weiteren Fahrzeugs 135, ein Gewähren der Vorfahrt des anderen Fahrzeugs 135, ein Anhalten des Kraftfahrzeugs 100 oder das Bilden einer Rettungsgasse umfassen.

In einer anderen Ausführungsform kann der Fahrer den Übergang vom Schritt 220 zum Schritt 230 auch dadurch beschleunigen, dass er seine Zustimmung zum Ausführen der empfangenen Fahranweisung gibt, beispielsweise durch Betätigen eines vorbestimmten Schalters oder Tasters.

Die Steuereinrichtung 105 aus Figur 1 und das Verfahren 200 aus Figur 2 sind dazu geeignet, einen Eingriff einer dazu befugten Person in den Straßenverkehr automatisiert zu behandeln. Dazu ist es erforderlich, dass die Fahranweisung auf eine andere als die übliche optische Weise übermittelt wird.

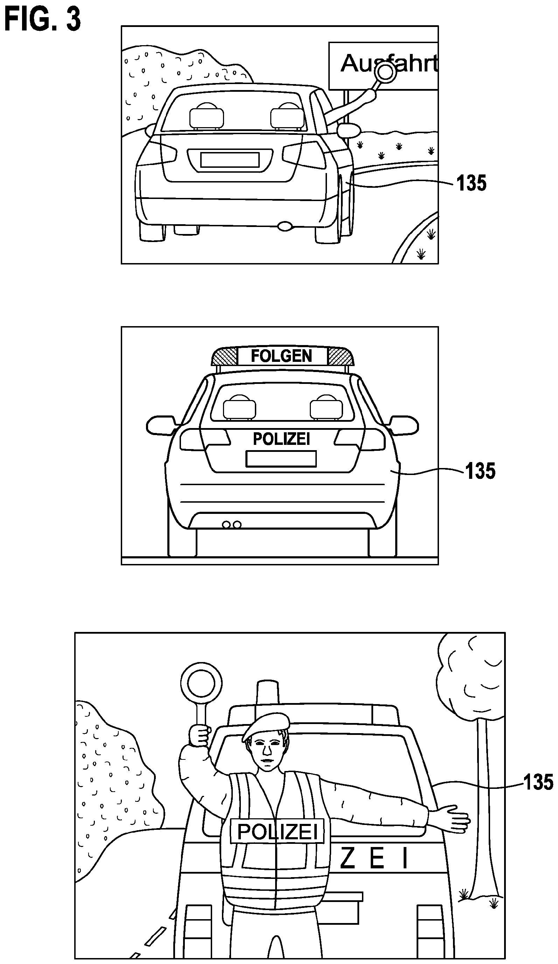

Figur 3 zeigt zum Vergleich auf klassische Weise übermittelte Fahranweisungen von befugten Personen, am vorliegenden Beispiel von Einsatzkräften der Polizei. In der oberen Darstellung wird aus einem Zivilfahrzeug heraus eine sogenannte Winkerkelle gehalten, um zu bedeuten, dass das folgende Fahrzeug dem Fahrzeug 135 folgen und ggf. anhalten soll. In der mittleren Darstellung wird die Fahranweisung durch eine kurze Textbotschaft auf einem Anhaltesignalgeber auf dem Dach des weiteren Fahrzeugs 135 ausgegeben. In diesem Fall ist das weitere Fahrzeug 135 als offizielles Polizeifahrzeug gut erkennbar.

In der unteren Darstellung von Figur 3 ist eine Person mit einer Warnweste dargestellt, die die Person als Polizisten kenntlich macht. Der Polizist hält eine Winkerkelle und gibt gleichzeitig ein Handzeichen, um ein sich ihm näherndes Kraftfahrzeug 100 zum Anhalten zu veranlassen.

Die in Figur 3 dargestellten Fahranweisungen können nach heutigem Stand der Technik optisch nur sehr schwer erfasst bzw. erkannt werden. Es wird daher vorgeschlagen, für die Beeinflussung eines fahrerunabhängig geführten Kraftfahrzeugs 100 zusätzlich oder alternativ zu den bekannten Signalen Fahranweisungen beispielsweise mittels Datenfunk drahtlos zu übertragen. Eine Steuereinrichtung 105 an Bord des Kraftfahrzeugs 100 kann die empfangene Fahranweisung dann selbst ausführen oder einen Fahrer des Kraftfahrzeugs 100 dazu veranlassen, dies zu tun.

## Patentansprüche

1. Verfahren (200) zum Steuern eines Kraftfahrzeugs (100), wobei das Verfahren (200) folgende Schritte umfasst:
- fahrerunabhängiges Führen (205) des Kraftfahrzeugs (100) auf einer Straße;
**gekennzeichnet durch** folgende Schritte:
- Empfangen (210) einer drahtlos übermittelten Fahranweisung von einer Einrichtung (130) in einer Umgebung des Kraftfahrzeugs (100), wobei die Einrichtung (130) an Bord eines vorausfahrenden Fahrzeugs (135) angebracht ist, wobei die Fahranweisung ein Folgen des vorausfahrenden Fahrzeugs (135) umfasst,
- Ausgeben (215) eines Hinweises auf die Fahranweisung an einen Fahrer des Kraftfahrzeugs (100),
- Bestimmen (220), dass der Fahrer das Führen des Kraftfahrzeugs (100) länger als eine vorbestimmte Zeit nicht übernommen hat; und
- fahrerunabhängiges Ausführen (230) der Fahranweisung.

2. Verfahren (200) nach Anspruch 1, ferner umfassend ein Abtasten einer Bestätigung der Fahranweisung durch den Fahrer, und des Übergebens der Führung des Kraftfahrzeugs (100) an den Fahrer.

3. Verfahren (200) nach Anspruch 2, wobei das Übernehmen der Führung durch den Fahrer an die Stelle übermittelt wird, von der die Fahranweisung empfangen wurde.

4. Verfahren (200) nach einem der vorangehenden Ansprüche, wobei die empfangene Fahranweisung bei der sendenden Stelle quittiert wird.

5. Computerprogrammprodukt mit Programmcodemitteln zur Durchführung des Verfahrens (200) nach einem der vorangehenden Ansprüche, wenn das Computerprogrammprodukt auf einer Verarbeitungseinrichtung (107) abläuft oder auf einem computerlesbaren Datenträger gespeichert ist.

6. Steuereinrichtung (105), welche dazu eingerichtet, ein Kraftfahrzeug (100) fahrerunabhängig auf einer Straße zu führen, **gekennzeichnet durch**:
- eine Empfangseinrichtung (125) zum Empfangen einer drahtlos übermittelten Fahranweisung von einer Einrichtung (130) in einer Umgebung des Kraftfahrzeugs (100), wobei die Einrichtung (130) an Bord eines vorausfahrenden Fahrzeugs (135) angebracht ist, wobei die Fahranweisung ein Folgen des vorausfahrenden Fahrzeugs (135) umfasst, und
- eine Ausgabeeinrichtung (140) zum Ausgeben eines Hinweises auf die Fahranweisung an einen Fahrer des Kraftfahrzeugs (100),
- und wobei die Steuereinrichtung (105) ferner dazu eingerichtet ist, die Fahranweisung fahrerunabhängig auszuführen, falls der Fahrer das Führen des Kraftfahrzeugs (100) länger als eine vorbestimmte Zeit nicht übernommen hat.

## Claims

1. Method (200) for controlling a motor vehicle (100) wherein the method (200) comprises the following steps:
- driving (205) the motor vehicle (100) on a road, independently of the driver;
**characterized by** the following steps:
- receiving (210) a driving instruction which is transmitted in a wireless fashion from a device (130) in the surroundings of the motor vehicle (100), wherein the device (130) is mounted onboard a vehicle (135) which is driving ahead, wherein the driving instruction comprises following the vehicle (135) which is driving ahead,
- outputting (215) a message relating to the driving instruction to the driver of the motor vehicle (100),
- determining (220) that the driver has not assumed the control of the motor vehicle (100) for longer than a predetermined time; and
- executing (230) the driving instruction independently of the driver.

2. Method (200) according to Claim 1, also comprising sensing a confirmation of the driving instruction by the driver and transferring the control of the motor vehicle (100) to the driver.

3. Method (200) according to Claim 2, wherein the transfer of the control by the driver is communicated to the location from which the driving instruction was received.

4. Method (200) according to one of the preceding claims, wherein the received driving instruction is acknowledged at the transmitting location.

5. Computer program product having program code means for carrying out the method (200) according to one of the preceding claims, when the computer program product runs on a processing device (107) or is stored on a computer-readable data carrier.

6. Control device (105) which is configured to drive a motor vehicle (100) on a road independently of the driver, **characterized by**:
- a receiver device (125) for receiving a driving instruction which is communicated in a wireless fashion from a device (130) in the surroundings of the motor vehicle (100), wherein the device (130) is mounted onboard a vehicle (135) which is driving ahead, wherein the driving instruction comprises following the vehicle (135) which is driving ahead, and
- an output device (140) for outputting a message relating to the driving instruction to the driver of the motor vehicle (100),
- and wherein the control (105) is also configured to execute the driving instruction independently of the driver if the driver has not assumed the control of the motor vehicle (100) for longer than a predetermined time.

## Revendications

1. Procédé (200) de commande d'un véhicule automobile (100), le procédé (200) comprenant les étapes suivantes :
- conduire indépendamment d'un conducteur (205) le véhicule automobile (100) sur une route ;
**caractérisé par** les étapes suivantes:
- recevoir (210) une instruction de conduite transmise sans fil d'un dispositif (130) situé dans un environnement du véhicule automobile (100), le dispositif (130) étant monté à bord d'un véhicule précédent (135), l'instruction de conduite comprenant la poursuite du véhicule précédent (135),
- délivrer (215) une indication à l'instruction de conduite à un conducteur du véhicule automobile (100),
- déterminer (220) que le conducteur n'a pas pris en charge la conduite du véhicule automobile (100) pendant plus d'un temps prédéterminé ; et
- exécuter indépendamment du conducteur (230) l'instruction de conduite.

2. Procédé (200) selon la revendication 1, comprenant en outre l'analyse d'une confirmation de l'instruction de conduite par le conducteur, et le transfert de la conduite du véhicule automobile (100) au conducteur.

3. Procédé (200) selon la revendication 2, la prise en charge de la conduite par le conducteur étant transmise au point où l'instruction de conduite a été reçue.

4. Procédé (200) selon l'une des revendications précédentes, l'instruction de conduite reçue étant acquittée au point d'envoi.

5. Progiciel comprenant des moyens de code de programme destinés à mettre en œuvre le procédé (200) selon l'une des revendications précédentes, lorsque le progiciel fonctionne sur un dispositif de traitement (107) ou est mémorisé sur un support de données lisible par ordinateur.

6. Dispositif de commande (105), qui est conçu pour conduire un véhicule automobile (100) indépendamment d'un conducteur sur une route, **caractérisé par** :
- un dispositif de réception (125) destiné à recevoir une instruction de conduite transmise sans fil par un dispositif (130) situé dans l'environnement du véhicule automobile (100), le dispositif (130) étant monté à bord d'un véhicule précédent (135), l'instruction de conduite comprenant la poursuite du véhicule précédent (135), et
- un dispositif de délivrance (140) destiné à délivrer une indication sur l'instruction de conduite à un conducteur du véhicule automobile (100),
- et le dispositif de commande (105) étant en outre conçu pour exécuter l'instruction de conduite indépendamment du conducteur si le conducteur n'a pas pris en charge la conduite du véhicule automobile (100) pendant plus d'un temps prédéterminé.
